# EUROPEAN PATENT SPECIFICATION

(11) **EP 3 334 060 B1**
(45) Date of publication and mention of the grant of the patent: **23.07.2025**
(21) Application number: 17197858.8
(22) Date of filing: 23.10.2017
(51) Int. Cl.: H04B 7/185, H01Q 3/26

(54) **ACCELERATED SATELLITE ACQUISITION METHOD BY BROADENING OF THE FIELD OF REGARD OF A RECONFIGURABLE PHASED ARRAY ANTENNA.**
BESCHLEUNIGTES SATELLITENERFASSUNGSVERFAHREN DURCH ERWEITERUNG DES SICHTFELDS EINER KONFIGURIERBAREN PHASENGESTEUERTEN GRUPPENANTENNE.
MÉTHODE D'ACQUISITION DE SATELLITE ACCÉLÉRÉE PAR ELARGISSEMENT DU CHAMP DE VUE D'UNE ANTENNE RÉSEAU À COMMANDE DE PHASE RECONFIGURABLE.

(30) Priority: 12.12.2016 US 201615375490
(43) Date of publication of application: 13.06.2018
(73) Proprietor: The Boeing Company, Arlington, VA 22202 (US)
(72) Inventor: FERIA, Ying J., Chicago, Illinois 60606-1596 (US); WHELAN, David, Chicago, Illinois 60606-1596 (US); RAMANUJAM, Parthasarathy, Chicago, Illinois 60606-1596 (US)
(74) Representative: Plasseraud IP

(56) References cited:
- EP-A1- 3 010 086
- EP-A2- 1 802 008
- US-A1- 2003 128 159
- US-A1- 2004 038 713
- US-A1- 2016 093 950

## Description

### BACKGROUND

The present invention relates to satellite communications networks, and in particular to an accelerated satellite acquisition scheme for satellite-capable user terminals.

In recent years, there has been an increased demand for wireless communications services. Various capabilities and services are being integrated into mobile devices, including the use of satellites operating in low Earth orbit (LEO) and medium Earth orbit (MEO), as well as geostationary or geosynchronous Earth orbit (GEO).

LEO is the simplest and cheapest for satellite placement, and it provides high bandwidth and low latency for communications services. Similarly, the most common use for satellites in MEO is for communications services, although navigation and geodetic/space environment science applications use MEO as well.

A problem exists in that satellites in both LEO and MEO are not visible from any given point on the Earth at all times, unlike GEO satellites. Because these LEO and MEO orbits are not geostationary, a network or constellation of satellites is required to provide continuous communications services coverage.

For both LEO and MEO satellites, current satellite signal acquisition techniques are based on using an omni-directional antenna in a user terminal, which can see most of the satellites in a field of regard (FoR) or field of view (FoV). The field of regard is the total area that can be captured by an antenna, while the field of view is an angular cone perceivable by the antenna at a particular time instant. The field of regard is typically much larger than the field of view, although the field of regard and field of view coincide for a stationary antenna.

When the user terminal is turned on, it needs to acquire the strongest satellite signal among the many signals in the field of regard or field of view.

However, with the advent of satellite broadband communications services, the antenna in the user terminal needs to be directional for higher gain. Specifically, this feature benefits the normal communication channel speed, but it is not desired during acquisition of the satellite signal.

What is needed, then, is an omni-directional antenna for use during signal acquisition, and a directional antenna for use during normal communications. The present invention satisfies this need. US2016/093950, according to its abstract, states a system includes a phased array antenna that is used to emulate antennas that have larger solid angle coverage and lower gain compared to a single beam of the phased array antenna. This is achieved by switching between beams of the phased array antenna while receiving a wireless communication signal and summing representations of signal energy received using the different beams. The system can be used to narrow down the angular coordinates of a transmitting satellite by emulating antenna patterns that cover portions of a search space. The system can also be used to determine a channel discriminator (e.g., frequency, code, time slot) that defines a signal being transmitted.. EP1802008, according to its abstract, states an antenna system electronically searches for a satellite signal by beginning at the current pointing angle of an antenna. The antenna system sweeps a tuner frequency of the receiver by electronically commanding the receiver to tune to different transponder frequencies. By scanning through transponder frequencies, the antenna system can locate a satellite signal without mechanical movement. As a result, the satellite signal can be acquired more quickly than in some conventional systems.

### SUMMARY

To overcome the limitations in the prior art described above, and to overcome other limitations that will become apparent upon reading and understanding the present specification, the present invention discloses a method and apparatus according to claims 1 and 7 respectively.

Further embodiments are disclosed in the dependent claims.

### DRAWINGS

Referring now to the drawings in which like reference numbers represent corresponding parts throughout:
FIG. 1 is a diagram showing an exemplary communications system, according to one example.
FIG. 2 illustrates the components of the satellite-capable mobile user terminal, according to one example.
FIGS. 3A and 3B illustrate alternative examples for the antenna used by the user terminal, according to one example.
FIGS. 4A, 4B and 4C are graphs of theta (degrees) vs. amplitude (dB), illustrating the difference in beam patterns of the antenna for acquisition mode vs. tracking mode, according to one example.
FIGS. 5A, 5B and 5C are diagrams (in degrees), illustrating the difference in beam patterns of the antenna for acquisition mode vs. tracking mode, according to one example.
FIG. 6 is a flowchart that illustrates the steps performed by the network, satellites and user terminals, according to one example.

### DETAILED DESCRIPTION

In the following description of the preferred example, reference is made to the accompanying drawings which form a part hereof, and in which is shown by way of illustration a specific example in which the invention may be practiced. It is to be understood that other examples may be utilized and structural changes may be made without departing from the scope of the present invention.

### System Description

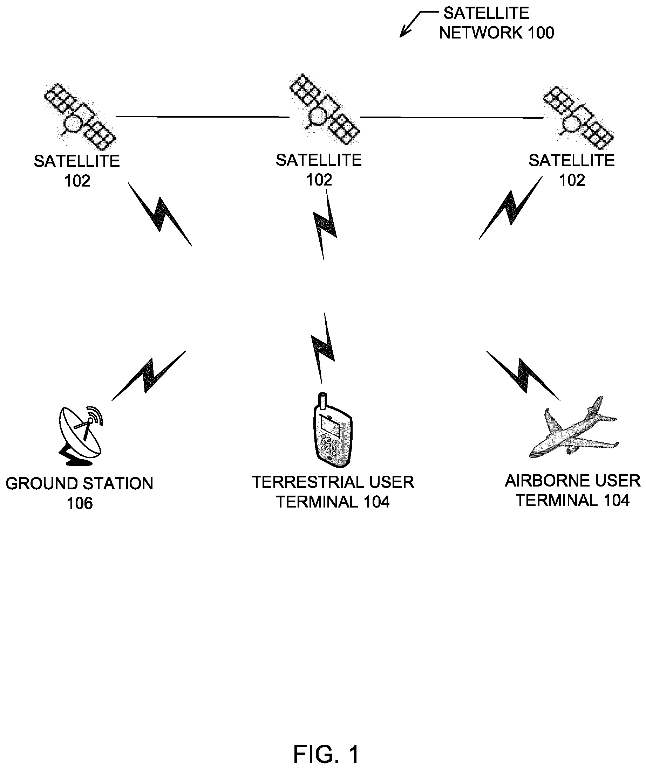

FIG. 1 is a diagram showing an exemplary communications system, according to one example. The communications system comprises a satellite network 100 that includes one or more satellites 102, and one or more satellite-capable user terminals 104 are provided, which are also labeled as a terrestrial user terminal 104 and an airborne user terminal 104 in FIG. 1, for communicating with the satellites 102.

Also in the example of FIG. 1, the satellite network 100 includes a ground station 106 for transmitting and receiving data to and from the satellites 102. The satellite network 100 may also interface to one or more other satellite, terrestrial and/or airborne networks (not shown), for example, a cellular or personal communications systems (PCS) network, wireless local area networks (WLANs), personal area networks (PANs), or other networks. The user terminals 104 may also operate with the other satellite, terrestrial and/or airborne networks.

There are a number of benefits to using a satellite network 100. One benefit is the ubiquitous coverage of the satellite network 100 as an alternative network option to the terrestrial networks. Another benefit of the satellite network 100 is surge capacity to overcome congestion in the terrestrial networks. A satellite network 100 also transcends outages in the terrestrial networks.

### User Terminal

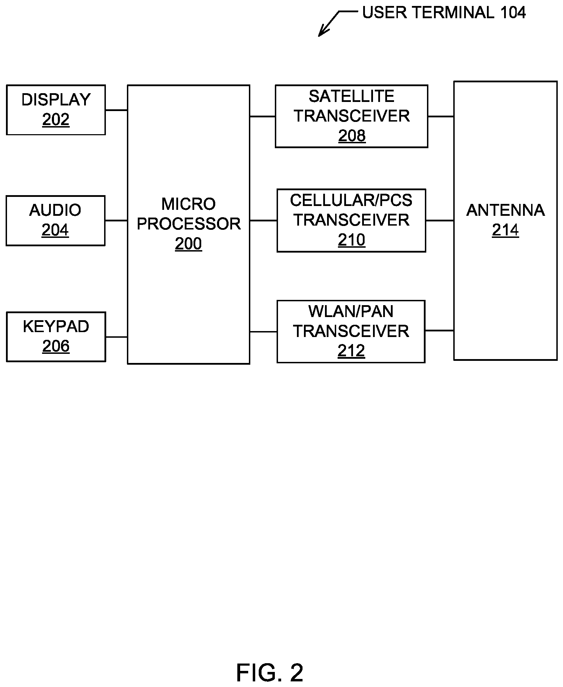

FIG. 2 illustrates the components of an exemplary user terminal 104, according to one example. The user terminal 104 includes a microprocessor 200 for controlling the terminal's 104 operations; one or more input/output components coupled to the microprocessor 200, such as display 202, audio 204 and keypad 206, for inputting and outputting data as directed by the microprocessor 200; a plurality of transmit/receive components coupled to the microprocessor 200 for communicating with a plurality of communications networks as directed by the microprocessor 200, wherein the transmit/receive components include a satellite transceiver 208 for communicating with the satellite network 100, a cellular/PCS transceiver 210 for communicating with a cellular/PCS network, a WLAN/PAN transceiver 212 for communicating with other WLAN/PAN elements, as well as transmit/receive components (not shown) for communicating with other networks; and an integrated antenna 218 coupled to the transmit/receive components, such as transceivers 208, 210 and 212, for communicating with the various communications networks.

### Phased Array Antenna

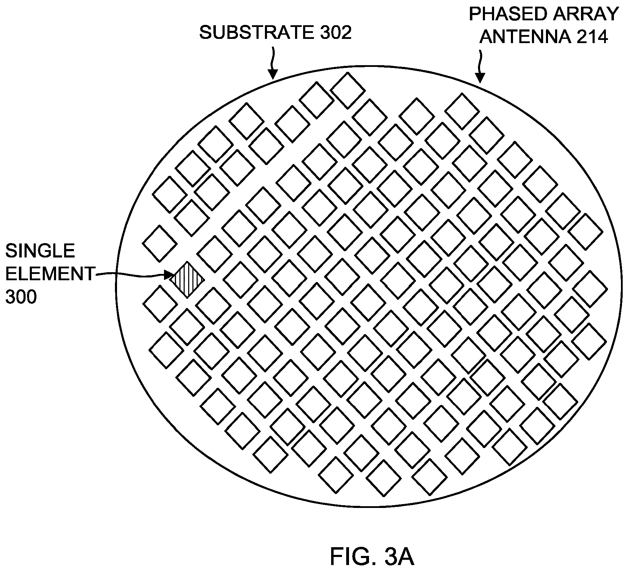

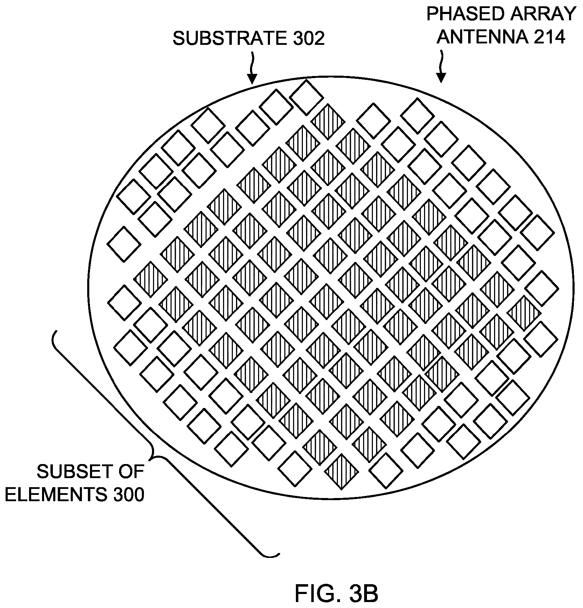

FIGS. 3A and 3B illustrate alternative examples for the antenna 218 used by the user terminal 104, according to one example. In both examples, the antenna 218 comprises a reconfigurable phased array antenna 218 that is omni-directional for use during signal acquisition and directional for use during normal communication. Specifically, the phased array antenna 218 is configured to be omni-directional to acquire the strongest satellite 102 signal among the signals in the field of regard, but the phased array antenna 218 is configured to be directional to provide the highest gain during normal communication. In this manner, the user terminal 104 optimizes and accelerates the satellite 102 signal acquisition process.

As shown in both FIGS. 3A and 3B, the phased array antenna 218 is comprised of an array of radiating elements 300 formed on a substrate 302. Each element 300 is shown as a square feature, but could comprise a patch, dipole, slot or other type of antenna element 300. The substrate 302 is shown as a circular feature, but could comprise any shape.

The elements 300 are individually selectable by the user terminal 104, such that the phases and/or amplitudes of signals feeding the elements 300 are varied to create a desired radiation pattern for the antenna 218. The resulting beams of the desired radiation pattern are formed and then steered by sequentially shifting the phase and/or amplitude of the signals feeding each element 300 to provide a constructive desired signal and/or destructive interference.

During acquisition of a satellite 102 signal, the phased array antenna 218 is re-configured, either by using only one element 300 to broaden the field of regard, or by using a "spoiled beam" with a subset or all of the elements 300 to broaden the field of regard, as well as to increase a receiving area for an increased signal-to-noise ratio (SNR). FIG. 3A illustrates one example, wherein only one of the elements 300 of the phased array antenna 218 is turned on for receiving, as indicated by the fill pattern, wherein this single element 300 has a much broader beam looking at a broadened field of regard, so it can see as many satellites 102 as possible. FIG. 3B illustrates another example, wherein a spoiled beam is formed using a subset or all of the elements 300, as indicated by the fill patterns, to broaden the field of regard, but with higher antenna 218 directivity to increase the signal-to-noise ratio.

The attributes of the signals received from one or more of the satellites 102 are analyzed by the user terminal 104, and a preferred satellite 102 is then selected by the user terminal 104 based on the attributes of the signals. After the satellite 102 has been selected, the phased array antenna 218 is re-configured to be directional towards the selected satellite 102 to provide a higher gain during normal communication with the selected satellite 102. Specifically, once the strongest satellite signal is acquired, the phased array antenna 218 is reconfigured to its beamforming mode to form a beam that is pointed at the satellite 102.

In one example, ephemeris data broadcast by the satellites 102 is used to slew/point the antenna 218 and its beam at the selected satellite 102, to keep tracking the selected satellite 102 after its signal is acquired. The ephemeris data comprises the location for the satellites 102 in the constellation at a particular point in time, and is broadcast by each of the satellites 102 on a low data rate pilot signal.

The ephemeris data broadcast by the satellites 102 is also used by the user terminal 104 to perform handoffs between satellites 102 in the constellation. Specifically, the user terminal 104 performs a "make before break" seamless satellite-to-satellite handover using the ephemeris data broadcast by the satellites 102 to select a next satellite 102 for use, before it terminates communication with the current satellite 102. Using the ephemeris data broadcast by the satellites 102, the user terminal 104 knows the positions of the satellites 102 in the constellation and acquires the signals from the next satellite 102 either with a wide beam (e.g., an omni-directional or spoiled beam) or another high-gain beam (e.g., a directional beam) pointing at the next satellite 102 for a satellite-to-satellite handover.

### Beam Patterns

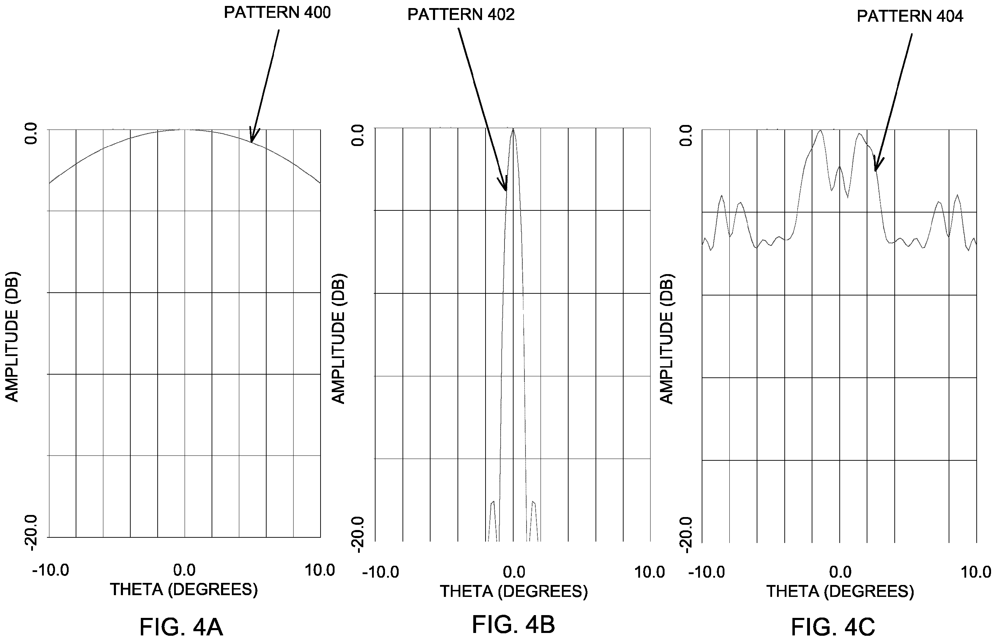

FIGS. 4A, 4B and 4C are graphs of theta (degrees) vs. amplitude (dB), illustrating the difference in beam patterns of the antenna 218 for acquisition mode vs. tracking mode.

FIG. 4A illustrates an array beam pattern for the antenna 218 in an acquisition mode, using one of the elements 300 of the antenna 218 for a wider beamwidth with lower gain that allows the antenna 218 to "see" as many satellite 102 signals as possible in the field of regard. Specifically, FIG. 4A illustrates a plane cut of a one-element 300 beam used for acquisition, with a +/- 10 degree beam width (at -3 dB to -5 dB down from the peak).

FIG. 4B illustrates an array beam pattern for the antenna 218 in a tracking mode, using all (or most) of the elements 300 of the antenna 218 for narrow beamwidth and higher gain that allows the antenna 218 to provide greater bandwidth to the selected satellite 102. Specifically, FIG. 4B illustrates a plane cut of an all-element 300 narrow beam for tracking, with a +/-0.5 degree beam width (at -3dB down from the peak).

FIG. 4C illustrates an array beam pattern for the antenna 218 in an acquisition mode, using a "spoiled beam" for a wider beamwidth with lower gain that allows the antenna 218 to "see" as many satellite 102 signals as possible in the field of regard. Specifically, FIG. 4C illustrates a plane cut of an all element 300 spoiled beam for acquisition, with a +/-3 degree beam width (at -3dB down from the peak). Note that the spoiled beam shown in FIG. 4C has a higher edge directivity (~ 18.0 dBi within the beamwidth of +/- 10 degrees) than that of the single element beam (~ 15.9 dBi) shown in FIG. 4A.

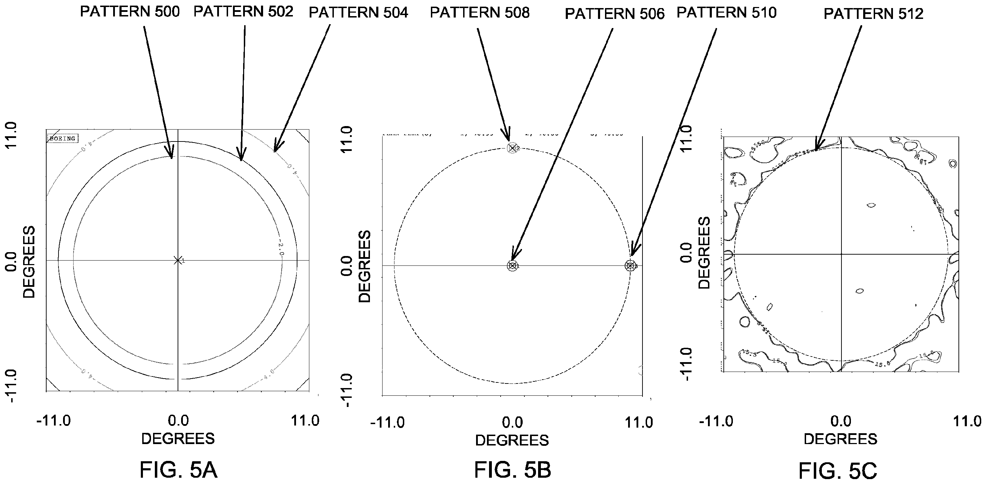

FIGS. 5A, 5B and 5C are diagrams (in degrees), illustrating the difference in beam patterns of the antenna 218 for acquisition mode vs. tracking mode.

FIG. 5A is a contour plot of a single element 300 beam used for acquisition mode. In this example, the antenna 218 in acquisition mode uses a single element 300 radiation pattern, with a wide beam at a lower gain (as compared to FIG. 5B). The three contours shown in FIG. 5A are at -2 dB down from the beam peak (500), -4 dB down from the beam peak (502), and -6 dB down from the beam peak (504). Also shown is the 20 degree diameter circle.

FIG. 5B is a contour plot of an all element 300 beam used for tracking mode. In this example, the antenna 218 in tracking mode uses a 1015 element 300 radiation pattern, with a narrow beam at a higher gain (as compared to FIGS. 5A and 5C) for a 10-degree scan angle. The three beams are: a first beam 506 scanned at 0 degrees, a second beam 508 scanned at about 9 degrees elevation, and a third beam 510 scanned at about 9 degrees azimuth. The contours are at -3 dB and -10 dB down from the beam peak.

FIG. 5C is a contour plot of an all element 300 spoiled beam used for acquisition mode. In this example, the antenna 218 in acquisition mode uses a 1015 element 300 radiation pattern, with a wide "spoiled beam" at a lower gain (as compared to FIG. 5B), with 17 dBi and 16.0 dBi contours for the spoiled beam.

### Process Flowchart

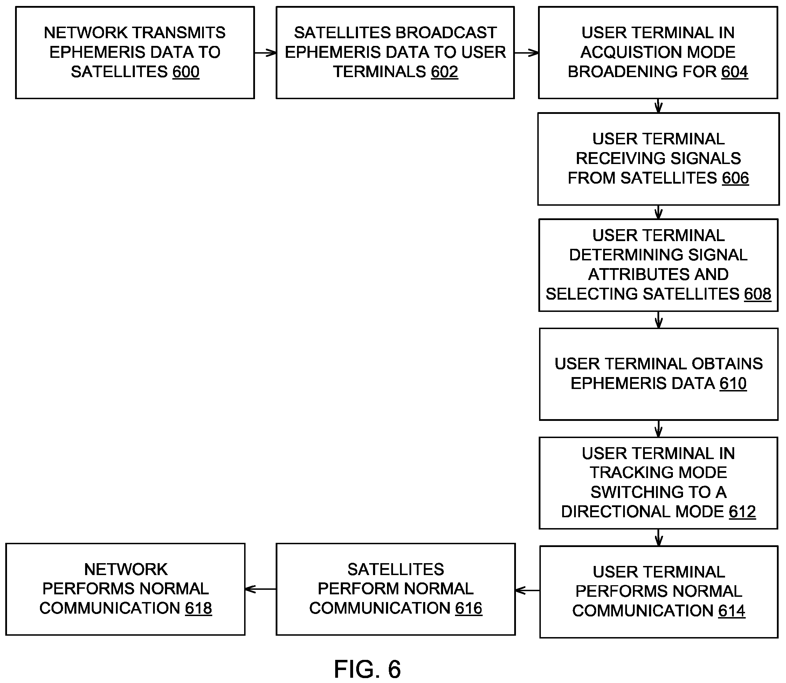

FIG. 6 is a flowchart that illustrates the steps performed by the network 100, satellites 102 and user terminals 104 in a method of establishing communication with a satellite 102, according to one example.

Block 600 represents the network 100 transmitting satellite ephemeris data to the satellites 102.

Block 602 represents the satellites 102 broadcasting the satellite ephemeris data to the user terminals 104.

Block 604 represents a user terminal 104, in acquisition mode after being turned on, broadening a field of regard of the reconfigurable phased array antenna 218 having a plurality of antenna elements 300. The broadened field of regard results in a wider beamwidth with lower gain that allows the antenna 218 to "see" as many signal sources, e.g., satellites 102, as possible.

In one example, the reconfigurable phased array antenna 218 is stationary (not slewing) when the user terminal 104 is in acquisition mode. In another example, the reconfigurable phased array antenna 218 is slewed to establish an initial pointing vector comprised of azimuth and elevation prior to acquisition of pilot signals from a plurality of satellites 102 within the field of regard, but the reconfigurable phased array antenna 218 is not slewed once the field of regard is selected.

In one example, the user terminal 104 broadens the field of regard by using a lesser number than a total number of the plurality of antenna elements 300 of the reconfigurable phased array antenna 218. This may further comprise selecting one antenna element 300 from the plurality of antenna elements 300 of the reconfigurable phased array antenna 218 (e.g., any one of the antenna elements 300 may be selected to provide redundancy and fault tolerance), or this may further comprise selecting a sub-array of two or more antenna elements 300 from the plurality of antenna elements 300 of the reconfigurable phased array antenna 218.

In another example, the user terminal 104 broadens the field of regard by using a spoiled beam by changing at least one of a phase and amplitude for (each or adjacent ones) of the plurality of antenna elements 300 of the reconfigurable phased array antenna 218 to spread a beam width. The spoiled beam is generated by introducing a phase difference that alters a coherence of the received signals at the reconfigurable phased array antenna 218.

Block 606 represents the user terminal 104 receiving pilot signals from a plurality of satellites 102 within the field of regard using the reconfigurable phased array antenna 218.

Block 608 represents the user terminal 104 determining one or more attributes of the pilot signals received from each of the satellites 102 and then selecting one of the plurality of satellites 102 for communication with the reconfigurable phased array antenna 218 based on the attributes of the received signals. In one example, the one or more attributes comprise signal strength, signal quality, or proximity to other signals.

Block 610 represents the user terminal 104 obtaining the satellite ephemeris data, as well as other broadcast system information, from the selected satellite 102.

Block 612 represents the user terminal 104, in tracking mode, switching to a directional (high gain, beamforming) mode for the reconfigurable phased array antenna 218, with the elements 300 of the antenna 218 forming a narrow beam pointed at the selected satellite 102, and establishing communications with the selected satellite 102 using the reconfigurable phased array antenna 218. Thereafter, the user terminal 104 tracks the selected satellite 102 using the ephemeris data to position the beams formed by the reconfigurable phased array antenna 218, wherein an initial pointing vector comprised of an azimuth and elevation and an initial tracking vector comprised of a flight path are determined based on the ephemeris data for the satellites 102 relative to a current terrestrial or airborne location of the user terminal 104 and the reconfigurable phased array antenna 218.

Block 614 represents the user terminal 104 performing normal communications, i.e., transmitting and/or receiving, with the selected satellite 102, including applications such as consumer, commercial and military communications, satellite television, satellite radio, and Internet access.

Block 616 represents the satellites 102 transmitting and/or receiving normal communications with the user terminals 104.

Block 618 represents the network 100 transmitting and/or receiving normal communications with the satellites 102.

## Claims

1. A method of establishing communication with a satellite, comprising:
providing a user terminal (104) including a reconfigurable phased array antenna (214) having a plurality of antenna elements (300), wherein the user terminal (104) is operable for, after being turned on:
in an acquisition mode, broadening (604) a field of regard of the reconfigurable phased array antenna (214) by using (604) a spoiled beam by changing at least one of a phase and amplitude for adjacent antenna elements (300) of the reconfigurable phased array antenna (214) to introduce a phase difference to alter the coherence of received signals at the phased array antenna (214) to thereby spread a beam width, wherein the reconfigurable phased array antenna (214) is configured to be stationary while in the acquisition mode;
receiving (606) signals from a plurality of satellites (102) within the field of regard using the reconfigurable phased array antenna (214);
determining (608) one or more attributes of the received signals for each of the satellites (102);
selecting (608) one of the plurality of satellites (102) for communication based on the attributes of the received signals;
switching (612) to a directional mode for the reconfigurable phased array antenna (214);
establishing (612) the communication with the selected satellite (102) using the reconfigurable phased array antenna (214); and
tracking (614) the selected satellite (102).

2. The method of claim 1, wherein the attributes comprise signal strength, signal quality, or proximity to other signals.

3. The method of claim 1, wherein tracking (614) the selected satellite (102) comprises determining (614) an initial pointing vector comprised of an azimuth and elevation and an initial tracking vector comprised of a flight path for the reconfigurable phased array antenna (214) based on ephemeris data for the satellites (102) relative to a current terrestrial or airborne location of the user terminal (104).

4. The method of any of claims 1-3, further comprising, after selecting (608) one of the plurality of satellites (102) for communication, receiving (610) ephemeris data from the selected one satellite (102).

5. The method of claim 1, further comprising performing a handoff between satellites (102) using broadcast ephemeris data.

6. The method of claim 5 wherein the handoff is performed using a high-gain beam in the reconfigurable phased array antenna (214).

7. An apparatus for establishing communication with a satellite (102), comprising:
a reconfigurable phased array antenna (214) having a plurality of antenna elements (300), wherein:
in an acquisition mode after being turned on, the apparatus is configured to broaden (604) a field of regard of the reconfigurable phased array antenna (214) prior to receiving (606) signals from the satellite (102) by using (604) a spoiled beam by changing at least one of a phase and amplitude for adjacent antenna elements (300) of the reconfigurable phased array antenna (214) to introduce a phase difference to alter the coherence of received signals at the phased array antenna (214) to thereby spread a beam width, wherein the reconfigurable phased array antenna (214) is configured to be stationary while in the acquisition mode;
wherein the reconfigurable phased array antenna (214) is configured to:
receive (606) signals from a plurality of satellites (102) within the field of regard using the reconfigurable phased array antenna (214);
determine (608) one or more attributes of the received signals for each of the satellites (102);
select (608) one of the plurality of satellites (102) for communication based on the attributes of the received signals;
switch (612) to a directional mode for the reconfigurable phased array antenna (214);
establish (612) the communication with the selected satellite (102) using the reconfigurable phased array antenna (214); and
track (614) the selected satellite (102).

8. The apparatus of claim 7, wherein tracking the signal source (102) comprises determining an initial pointing vector comprised of an azimuth and elevation and an initial tracking vector comprised of a flight path for the reconfigurable phased array antenna (214) based on ephemeris data for the satellite (102) relative to a current terrestrial or airborne location of a user terminal (104).

9. The apparatus of any of claims 7-8, further configured to, after selecting (608) one of the plurality of satellites (102) for communication, receive (610) ephemeris data from the selected satellite (102).

10. The apparatus of claim 7, further configured to perform a handoff between satellites (102) using broadcast ephemeris data.

11. The apparatus of claim 10, further configured to perform a handoff between satellites (102) when in the directional mode.

12. The apparatus of claim 10 wherein the handoff is configured to be performed using a high-gain beam in the reconfigurable phased array antenna (214).

## Patentansprüche

1. Verfahren zum Aufbauen einer Kommunikation mit einem Satelliten, aufweisend:
Bereitstellen eines Nutzerendgeräts (104), das eine rekonfigurierbare phasengesteuerte Gruppenantenne (214) mit mehreren Antennenelementen (300) hat, wobei das Nutzerendgerät (104), nachdem es eingeschaltet worden ist, betreibbar ist, zum:
in einem Erfassungsmodus, Erweitern (604) eines Sichtfelds der rekonfigurierbaren phasengesteuerten Gruppenantenne (214) durch Verwenden (604) eines Stör-Strahls durch Ändern einer Phase und/oder einer Amplitude für benachbarte Antennenelemente (300) der rekonfigurierbaren phasengesteuerten Gruppenantenne (214), um eine Phasendifferenz hineinzubringen, um die Kohärenz der empfangenen Signale an der phasengesteuerten Gruppenantenne (214) zu ändern, um dadurch eine Strahlbreite auszudehnen, wobei die rekonfigurierbare phasengesteuerte Gruppenantenne (214) konfiguriert ist, während des Erfassungsmodus stationär zu sein;
Empfangen (606) von Signalen aus mehreren Satelliten (102) im Bereich des Sichtfelds unter Verwendung der rekonfigurierbaren phasengesteuerten Gruppenantenne (214);
Bestimmen (608) eines oder mehrerer Attribute der empfangenen Signale für jeden der Satelliten (102);
basierend auf den Attributen der empfangenen Signale, Auswählen (608) eines der mehreren Satelliten (102) für eine Kommunikation;
Umschalten (612) auf einen Richtmodus für die rekonfigurierbare phasengesteuerte Gruppenantenne (214);
Aufbauen (612) der Kommunikation mit dem ausgewählten Satelliten (102) unter Verwendung der rekonfigurierbaren phasengesteuerten Gruppenantenne (214); und
Nachverfolgen (614) des ausgewählten Satelliten (102).

2. Verfahren nach Anspruch 1, wobei die Attribute Signalstärke, Signalqualität oder Nähe zu anderen Signalen aufweisen.

3. Verfahren nach Anspruch 1, wobei Nachverfolgen (614) des ausgewählten Satelliten (102) aufweist: Bestimmen (614) eines anfänglichen Peilvektors, der aus einem Azimut und einer Höhe besteht, und eines anfänglichen Nachverfolgungsvektors, der aus einem Flugpfad besteht, für die rekonfigurierbare phasengesteuerte Gruppenantenne (214) auf Basis von Ephemeriden-Daten für die Satelliten (102) relativ zu einem aktuellen Ort des Nutzerendgeräts (104) am Boden oder in der Luft.

4. Verfahren nach einem der Ansprüche 1 bis 3, ferner aufweisend, nach Auswählen (608) eines der mehreren Satelliten (102) für eine Kommunikation, Empfangen (610) von Ephemeriden-Daten aus dem ausgewählten Satelliten (102).

5. Verfahren nach Anspruch 1, ferner aufweisend: Durchführen einer Übergabe zwischen Satelliten (102) unter Verwendung von gesendeten Ephemeriden-Daten.

6. Verfahren nach Anspruch 5, wobei die Übergabe unter Verwendung eines Hochleistungsstrahls in der rekonfigurierbaren phasengesteuerten Gruppenantenne (214) durchgeführt wird.

7. Vorrichtung zum Aufbauen einer Kommunikation mit einem Satelliten (102) aufweisend:
eine rekonfigurierbare phasengesteuerte Gruppenantenne (214) mit mehreren Antennenelementen (300), wobei:
in einem Erfassungsmodus nach dem Einschalten die Vorrichtung konfiguriert ist zum
Erweitern (604) eines Sichtfelds der rekonfigurierbaren phasengesteuerten Gruppenantenne (214), vor Empfangen (606) von Signalen aus dem Satelliten (102), durch Verwenden (604) eines Stör-Strahls durch Ändern einer Phase und/oder einer Amplitude für benachbarte Antennenelemente (300) der rekonfigurierbaren phasengesteuerten Gruppenantenne (214), um eine Phasendifferenz hineinzubringen, um die Kohärenz der empfangenen Signale an der phasengesteuerten Gruppenantenne (214) zu ändern, um dadurch eine Strahlbreite auszudehnen, wobei die rekonfigurierbare phasengesteuerte Gruppenantenne (214) konfiguriert ist, während des Erfassungsmodus stationär zu sein;
wobei die rekonfigurierbare phasengesteuerte Gruppenantenne (214) konfiguriert ist zum
Empfangen (606) von Signalen aus mehreren Satelliten (102) im Bereich des Sichtfelds unter Verwendung der rekonfigurierbaren phasengesteuerten Gruppenantenne (214);
Bestimmen (608) eines oder mehrerer Attribute der empfangenen Signale für jeden der Satelliten (102);
basierend auf den Attributen der empfangenen Signale, Auswählen (608) eines der mehreren Satelliten (102) für eine Kommunikation;
Umschalten (612) auf einen Richtmodus für die rekonfigurierbare phasengesteuerte Gruppenantenne (214);
Aufbauen (612) der Kommunikation mit dem ausgewählten Satelliten (102) unter Verwendung der rekonfigurierbaren phasengesteuerten Gruppenantenne (214); und
Nachverfolgen (614) des ausgewählten Satelliten (102).

8. Vorrichtung nach Anspruch 7, wobei Nachverfolgen (614) der Signalquelle (102) aufweist: Bestimmen eines anfänglichen Peilvektors, der aus einem Azimut und einer Höhe besteht, und eines anfänglichen Nachverfolgungsvektors, der aus einem Flugpfad besteht, für die rekonfigurierbare phasengesteuerte Gruppenantenne (214) auf Basis von Ephemeriden-Daten für den Satelliten (102) relativ zu einem aktuellen Ort eines Nutzerendgeräts (104) am Boden oder in der Luft.

9. Vorrichtung nach einem der Ansprüche 7 bis 8, die nach Auswählen (608) eines der mehreren Satelliten (102) für eine Kommunikation ferner zum Empfangen (610) von Ephemeriden-Daten aus dem ausgewählten Satelliten (102) konfiguriert ist.

10. Vorrichtung nach Anspruch 7, die ferner zum Durchführen einer Übergabe zwischen Satelliten (102) unter Verwendung von gesendeten Ephemeriden-Daten konfiguriert ist.

11. Vorrichtung nach Anspruch 10, die ferner zum Durchführen einer Übergabe zwischen Satelliten (102) konfiguriert ist, wenn sie im Richtmodus ist.

12. Vorrichtung nach Anspruch 10, wobei die Übergabe konfiguriert ist, um unter Verwendung eines Hochleistungsstrahls in der rekonfigurierbaren phasengesteuerten Gruppenantenne (214) durchgeführt zu werden.

## Revendications

1. Procédé d'établissement d'une communication avec un satellite, comprenant :
la fourniture d'un terminal utilisateur (104) comportant une antenne réseau à commande de phase (214) reconfigurable ayant une pluralité d'éléments d'antenne (300), dans lequel le terminal utilisateur (104) peut servir à, après avoir été mis sous tension :
dans un mode d'acquisition, élargir (604) un champ de vision de l'antenne réseau à commande de phase (214) reconfigurable en utilisant (604) un faisceau dégradé en changeant au moins une parmi une phase et une amplitude pour des éléments d'antenne (300) adjacents de l'antenne réseau à commande de phase (214) reconfigurable pour introduire une différence de phase pour modifier la cohérence de signaux reçus au niveau de l'antenne réseau à commande de phase (214) pour accroître ainsi une largeur de faisceau, dans lequel l'antenne réseau à commande de phase (214) reconfigurable est configurée pour être stationnaire pendant le mode d'acquisition ;
recevoir (606) des signaux provenant d'une pluralité de satellites (102) dans le champ de vision en utilisant l'antenne réseau à commande de phase (214) reconfigurable ;
déterminer (608) un ou plusieurs attributs des signaux reçus pour chacun des satellites (102) ;
sélectionner (608) un de la pluralité de satellites (102) pour la communication sur la base des attributs des signaux reçus ;
passer (612) à un mode directionnel pour l'antenne réseau à commande de phase (214) reconfigurable ;
établir (612) la communication avec le satellite (102) sélectionné en utilisant l'antenne réseau à commande de phase (214) reconfigurable ; et
suivre (614) le satellite (102) sélectionné.

2. Procédé selon la revendication 1, dans lequel les attributs comprennent une intensité de signal, une qualité de signal ou la proximité d'autres signaux.

3. Procédé selon la revendication 1, dans lequel le suivi (614) du satellite (102) sélectionné comprend la détermination (614) d'un vecteur de pointage initial consistant en un azimut et une élévation et d'un vecteur de suivi initial consistant en une trajectoire de vol pour l'antenne réseau à commande de phase (214) reconfigurable sur la base de données d'éphémérides pour les satellites (102) relatives à un emplacement terrestre ou aérien courant du terminal utilisateur (104).

4. Procédé selon l'une quelconque des revendications 1 à 3, comprenant en outre, après la sélection (608) d'un de la pluralité de satellites (102) pour la communication, la réception (610) de données d'éphémérides à partir du satellite (102) sélectionné.

5. Procédé selon la revendication 1, comprenant en outre la réalisation d'un transfert entre des satellites (102) en utilisant des données d'éphémérides diffusées.

6. Procédé selon la revendication 5 dans lequel le transfert est réalisé en utilisant un faisceau à gain élevé dans l'antenne réseau à commande de phase (214) reconfigurable.

7. Appareil pour établir une communication avec un satellite (102), comprenant :
une antenne réseau à commande de phase (214) reconfigurable ayant une pluralité d'éléments d'antenne (300), dans lequel :
dans un mode d'acquisition après avoir été mis sous tension, l'appareil est configuré pour élargir (604) un champ de vision de l'antenne réseau à commande de phase (214) reconfigurable avant la réception (606) de signaux à partir du satellite (102) en utilisant (604) un faisceau dégradé en changeant au moins une parmi une phase et une amplitude pour des éléments d'antenne (300) adjacents de l'antenne réseau à commande de phase (214) reconfigurable pour introduire une différence de phase pour modifier la cohérence de signaux reçus au niveau de l'antenne réseau à commande de phase (214) pour accroître ainsi une largeur de faisceau, dans lequel l'antenne réseau à commande de phase (214) reconfigurable est configurée pour être stationnaire pendant le mode d'acquisition ;
dans lequel l'antenne réseau à commande de phase (214) reconfigurable est configurée pour :
recevoir (606) des signaux provenant d'une pluralité de satellites (102) dans le champ de vision en utilisant l'antenne réseau à commande de phase (214) reconfigurable ;
déterminer (608) un ou plusieurs attributs des signaux reçus pour chacun des satellites (102) ;
sélectionner (608) un de la pluralité de satellites (102) pour la communication sur la base des attributs des signaux reçus ;
passer (612) à un mode directionnel pour l'antenne réseau à commande de phase (214) reconfigurable ;
établir (612) la communication avec le satellite (102) sélectionné en utilisant l'antenne réseau à commande de phase (214) reconfigurable ; et
suivre (614) le satellite (102) sélectionné.

8. Appareil selon la revendication 7, dans lequel le suivi de la source de signal (102) comprend la détermination d'un vecteur de pointage initial consistant en un azimut et une élévation et d'un vecteur de suivi initial consistant en une trajectoire de vol pour l'antenne réseau à commande de phase (214) reconfigurable sur la base de données d'éphémérides pour le satellite (102) relatives à un emplacement terrestre ou aérien courant d'un terminal utilisateur (104).

9. Appareil selon l'une quelconque des revendications 7 et 8, configuré en outre pour, après la sélection (608) d'un de la pluralité de satellites (102) pour la communication, recevoir (610) des données d'éphémérides à partir du satellite (102) sélectionné.

10. Appareil selon la revendication 7, configuré en outre pour réaliser un transfert entre des satellites (102) en utilisant des données d'éphémérides diffusées.

11. Appareil selon la revendication 10, configuré en outre pour réaliser un transfert entre des satellites (102) lorsqu'il est en mode directionnel.

12. Appareil selon la revendication 10 dans lequel le transfert est configuré pour être réalisé en utilisant un faisceau à gain élevé dans l'antenne réseau à commande de phase (214) reconfigurable.
